# EUROPEAN PATENT APPLICATION

(11) **EP 4 711 886 A1**
(43) Date of publication of application: **18.03.2026**
(21) Application number: 24199771.7
(22) Date of filing: 11.09.2024
(51) Int. Cl.: G06F 1/08, G06F 3/03, G06F 3/0354, G06F 3/038

(54) **COMPUTER IMPLEMENTED METHOD FOR OPERATING A COMPUTER MOUSE WITH IMPROVED REPORT RATE**

(71) Applicant: EM Microelectronic-Marin SA, 2074 Marin (CH)
(72) Inventor: SABY, Jérôme, 2022 Bevaix (CH); PIEROBON, Lorenzo, 2000 Neuchâtel (CH); SCHLACHTER, Jérémy, 1584 Villars-le-Grand (CH)
(74) Representative: ICB SA

(57) **Abstract**

A computer-implemented method for operating a computer mouse comprising an optical sensor emitting flashes and calculating displacements, a communication module to communicate with a host MCU computer and one or more processors coupled to the optical sensor, the method comprising steps:
- calculating an optical sensor flash rate by the host MCU computer,
- triggering by the host MCU computer communication with the optical sensor in order to read the calculated displacement and triggers the next displacement calculation of the optical sensor to ask the optical sensor for the position at a time between two flashes.

## Description

### Field of the invention

The present invention relates to a computer implemented method for operating a computer mouse with improved report rate.

### Background of the invention

A computer peripheral device, especially a mouse is using an optical sensor to calculate the displacement and reports it to the computer. The sensor makes regular flashes and the displacement is read at a fix polling rate by the host MCU (MicroController Unit), then sent to the computer.

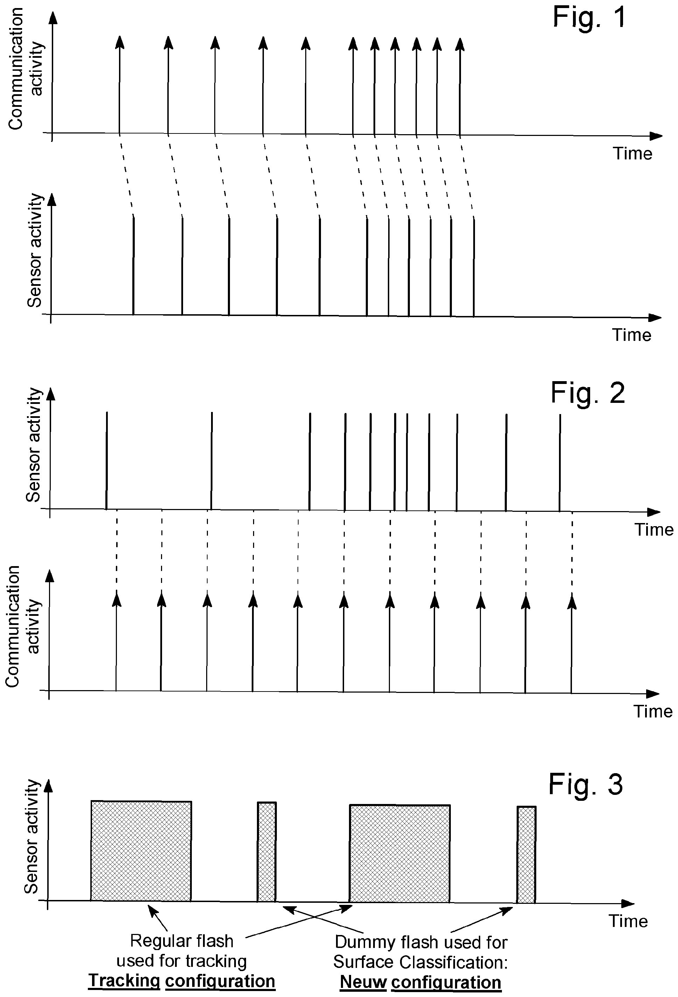

With the state of the art implementation, see figure 2, the sensor performs the calculation of the displacement depending on the motion of the mouse on the surface. The host reads the displacement at a given rate that is not synchronous with sensors calculations. This means that the sensor activity and the communication activity are not synchronous. Additionally, since the sensor does not indicate when the displacement was calculated, the host MCU assumes that the displacement is calculated when the communication activity takes place. This leads the host MCU to perceive jitters on the displacements read out from the sensor.

However, a problem is jitter in reported displacement due to lack of synchronization between the sensor activity to calculate the displacement, and the communication activity of the Host MCU to read the displacement calculated by the sensor.

It is an object of the invention to deal with the above problem.

### Summary of the invention

According to a first aspect, the invention proposes a computer-implemented method for operating a computer mouse for operating a computer mouse comprising an optical sensor emitting flashes and calculating displacements, a communication module to communicate with a host MCU computer and one or more processors coupled to the optical sensor, the method comprising steps:
- calculating an optical sensor flash rate, said tracking flash rate, by the host MCU computer,
- triggering by the host MCU computer communication with the optical sensor in order to read the calculated displacement and triggers the next displacement calculation of the optical sensor to ask the optical sensor for the position at a time between two flashes.

According to one embodiment, the host MCU computer triggers flashes, tracking flashes and surface flashes, in order identify relative displacement and/or surface characteristics along an underlying surface.

Preferably, the host MCU computer triggers and reads calculated displacement according to a fixed time or calculated base, preferably every millisecond.

Preferably, the host MCU computer, during each trigger at the present time (t), reads and sums the previous calculated displacement from the optical sensor, between the previous time (t-1) and the present time (t), and then send it to a computer.

According to one embodiment, the method comprising steps for:
- calculating a surface optical sensor flash rate taking into account the tracking or displacement optical sensor flash rate,
- generating surface flashes in order to identify surface characteristics along the underlying surface, so that a surface flash is generated between two tracking flashes.

For example, the flash timing of surface characteristics flash is emitted approximately half the time between flashes of the displacement flashes.

According to preceding embodiment, the time period between two displacement flashes is constant or variable.

Preferably a surface characteristics classification comprises a method of comparing the average light detected per pixel comprising the following steps:
- acquire an image associated to the underlying surface, having a pixel array,
- detect an average light for each pixel and associate the average light value with a column size or number,
- compare the average column light to an internal reference, preferably a programmable reference or the average of the complete image.

According to another aspect of the invention, there is proposed a computer mouse comprising:
- a housing,
- a communication module coupled to a host MCU computer device,
- an optical sensor configured to generate optical data via flashes corresponding to an underlying surface,
- one or more processors coupled to the optical sensor, configured to implement the computer-implemented method according to any of preceding features of the previous aspect.

Due to triggering by the host MCU, it is possible to synchronize the sensor activity with the communication activity. When the host initiates a communication activity, it both reads the previous calculated displacement and triggers the next displacement calculation of the sensor. The host is aware of when the displacement is calculated, thus eliminating the jitter.

### Brief description of the drawings

The present invention will be described subsequently in more detail with reference to the attached drawing, given by way of examples, but in no way limited thereto, in which:
- Figure 1 is two-time diagrams, one showing communication activity and the other showing sensor activity according to one embodiment in which host MCU computer triggers communication;
- Figure 2 is two-time diagrams, one showing communication activity and the other showing sensor activity according to state of art showing synchronization problem;
- Figure 3 is a time diagram showing a surface flash is generated between two tracking flashes;
- Figure 4 is an illustration of column average deviation method to classify surface.

### Detailed description of the invention

With reference to figure 1, there is illustrated the method according to one embodiment of the invention, in which host MCU computer initiates a communication activity by arrows indicating triggerings. It both reads the previous calculated displacement and triggers the next displacement calculation of the sensor. The host is aware of when the displacement is calculated, thus eliminating the jitter.

With reference to figure 3, there is illustrated an embodiment comprising also steps for:
- calculating a tracking optical sensor flash rate,
- generating tracking flashes in order identify relative displacement along an underlying surface,
- calculating a surface optical sensor flash rate taking into account the tracking or displacement optical sensor flash rate,
- generating surface flashes in order identify surface characteristics along the underlying surface, so that a surface flash is generated between two tracking flashes as illustrated in figure 3.

According to figure 3, the flash duration of surface characteristics flash is less than the flash duration of displacement flashes, preferably divide approximately by six.

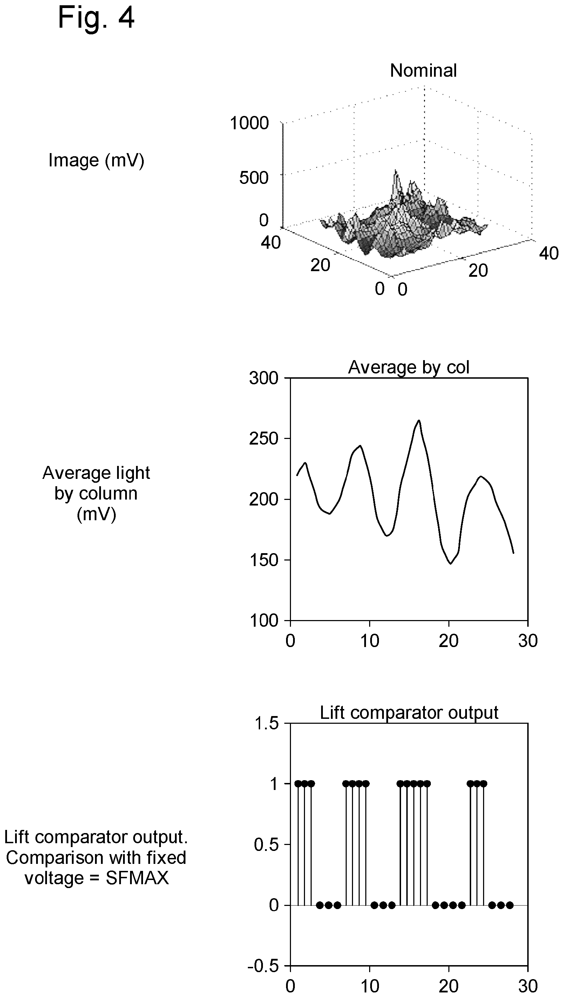

With reference to figure 4, there is illustrated a method of classifying surface characteristics comprising a method of comparing the average light detected per pixel.

Preferably, the method of comparing the average light detected per pixel comprises the following steps:
- define a pixel array of the image associated with the underlying surface,
- detect an average light for each pixel and associate the average light value with a column size or number,
- compare the average column light to an internal reference, preferably a programmable reference or the average of the complete image.

Particularly, in order to detect the surface characteristics, there is provided an embedded algorithm embedded to the sensor and will decode the average light by column.

The image (voltage indication indicating the illumination of each pixel) is averaged by column.

The average column light is compared to an internal reference. This reference can be selected from a programmable reference or the average of the complete image. The comparator reference can be changed during operation in order to have the best settings to detect the surface characteristics. For example, each value of the average column is compared to an internal reference of 200mV.

Then the pattern given by the comparator output are decoded by the internal processor in order to extract the first valid column, the first column higher than the reference, starting for the highest number. The result of the processing is a column number. In the illustration, the highest valid column is 25. For one flash, a column number is attributed.

The surface classification lasts a given count of flashes, for example 30. Flash to flash, the image will change, and the high column number will vary. The minimum column number and the maximum column number are stored for 30 flashes and then the difference (max - min) is compared to an internal threshold (7 in the current application), which is the criteria to distinguish the surface.

## Claims

1. A computer-implemented method for operating a computer mouse comprising an optical sensor emitting flashes and calculating displacements, a communication module to communicate with a host MCU computer and one or more processors coupled to the optical sensor, the method comprising steps:
- calculating an optical sensor flash rate by the host MCU computer,
- triggering by the host MCU computer communication with the optical sensor in order to read the calculated displacement and triggers the next displacement calculation of the optical sensor to ask the optical sensor for the position at a time between two flashes.

2. The method of preceding claim, in which the host MCU computer triggers flashes, tracking flashes and surface flashes, in order to identify relative displacement and/or surface characteristics along an underlying surface.

3. The method of any of preceding claims, in which the host MCU computer triggers and reads calculated displacement according to a fixed time or calculated base, preferably every millisecond.

4. The method of any of preceding claims, in which the host MCU computer, during each trigger at the present time (t), reads and sums the previous calculated displacement from the optical sensor, between the previous time (t-1) and the present time (t), and then send it to a computer.

5. The method of any of claims 2 to 4, in which a surface flash is generated between two tracking flashes.

6. The method of preceding claim, in which the flash timing of surface characteristics flash is emitted approximately half the time between flashes of the tracking flashes.

7. The method of preceding claim 5 or 6, in which the time period between two displacement flashes is constant or variable.

8. The method of any of preceding claims 5 to 7, in which a surface characteristics classification comprises a method of comparing the average light detected per pixel comprising the following steps:
- acquire an image associated to the underlying surface, having a pixel array,
- detect an average light for each pixel and associate the average light value with a column size or number,
- compare the average column light to an internal reference, preferably a programmable reference or the average of the complete image.

9. Computer mouse comprising :
- a housing,
- a communication module coupled to a host computer device,
- an optical sensor configured to generate optical data via flashes corresponding to an underlying surface,
- one or more processors coupled to the optical sensor, configured to implement the computer-implemented method according to one of the preceding claims.
